# EUROPEAN PATENT APPLICATION

(11) **EP 1 427 197 A1**
(43) Date of publication of application: **09.06.2004**
(21) Application number: 02026926.2
(22) Date of filing: 03.12.2002
(51) Int. Cl.: H04N 5/445

(54) **Apparatus for producing TV advertising contents and inserting interstitial advertisements on TV programs**

(71) Applicant: Yu, Ming-Ho, Lishan St., Hsinchu (TW)
(72) Inventor: Yu, Ming-Ho, Lishan St., Hsinchu (TW)
(74) Representative: Viering, Jentschura & Partner

(57) **Abstract**

An apparatus and method for producing TV advertising contents and inserting interstitial advertisements on TV programs which is primarily used to interstitially insert the DIY audio, video, graphics, and texts onto ordinary TV programs, where the Data Storage Unit can record these audio/video and graphic/text data of ad contents. Users can store pictures and sounds captured by digital cameras or digital camcorders in the Data Storage Unit. The data of audio/video and graphic/text stored in the Data Storage Unit can be provided to the Video and Graphics Processing Unit for blending or overlaying, and be incorporated into the TV programs that are transferred from the Audio and Video Input Unit. The way to incorporate video for broadcasting includes to broadcast with two (or more than two) pictures (the pictures from Data Storage Unit and the picture of TV programs) blended, and to broadcast with Picture-in-Picture (PIP) overlay. In addition, it is available to insert captions or on-screen-displays through an User Interface Unit.

## Description

### BACKGROUND OF THE INVENTION

### 1. Field of the invention

The present invention relates to an apparatus and method for producing TV advertising contents and inserting interstitial advertisements on TV programs and more particularly to an apparatus and method for producing TV advertising contents and inserting interstitial advertisements on TV programs to allow average users to manually insert interstitial ads onto TV programs with one self's television.

### 2. Description of the prior art

Television serves as a provider of educational and recreational programs, and a way to broadcast TV commercials and to transmit messages. The conventional art of leveraging TV for product promotion or for advertising is to entrust an ad-agent to plan and produce a film, and to repeatedly broadcast to clients or the public by the taped video or CD-ROM disc for advertisement. However, the above-mentioned method for producing TV advertisements has the disadvantage that cannot be spread to common users to produce TV advertisements and to apply the DIY advertisements as interstitial ads on their own televisions.

In conventional way of producing advertisements, it is possible to use PC and the Video Capture to load signals from TV programs and overlay with ad contents composing images, graphics and texts. And then to convert the computer format of graphic and text, e.g. VGA (Video Graphics Array) format, into video format for TV, e.g. National Television Standards Committee (NTSC) or Phase Alternative Line (PAL) format, and transmit to the television for broadcasting. PCs have become quite popular and have advanced function of audio/video and text/graphic processing. However, to use PC to playback a short, frequently rebroadcast advertisement is not economically effective. Therefore, very few people produce advertisements by PCs and to playback their DIY ads or messages on their own TV.

The disadvantages of conventional art for broadcasting TV advertisements are concluded as follows:
1. The content of advertisements have to rely on agents and cannot modify the content by clients themselves. Also, each production and modification require time costs and therefore is not rigid for advertising or promotional contents that needs to be changed at high frequency.
2. Usually a high expenditure is required to entrust a broadcaster or ad-agent to broadcast the advertisement.
3. Ordinary people are neither have no such a capability to produce TV ads all by themselves nor have the intention to spend too much money to do so.
4. People cannot control the broadcasting time by their own choices if it is commissioned with a broadcaster or an ad-agent.
5. Usually the present TV program has to be broke off in order to broadcast the advertisement. However, pure advertisement without TV program has less attraction to audiences.
6. It is a must to have a PIP (Picture-in-Picture) television to watch TV program on, e.g. main picture and interstitial ads on, e.g. sub picture at a time.
7. It is possible to add captions onto TV programs only if to use another caption generator.
8. Not applicable to small number of particular users, or regional low-cost TV advertising activities.
9. It is not economically effective to use PC to insert and transmit short ads onto TV programs and to broadcast on the television.
10. There is no an all-in-one apparatus, which is easy to operate and fits popular needs on both functions and pricing, to enable DIY ad production and home broadcasting.

Due to the above-mentioned problems or lacking of easy-to-use and low-priced equipment, almost no people or only very few people produce TV ads on their own and to transmit and spread messages by inserting interstitial ads onto TV programs by their own televisions.

### SUMMARY OF THE INVENTION

One object of the invention to provide an apparatus and method for producing TV advertising contents and inserting interstitial advertisements on TV programs, which allow users to easily produce TV advertising contents (including video, audio, graphics, and texts), to freely and instantly modify the contents by themselves, and to minimize the expenses of such production.

The second object of the invention to provide an apparatus and method for producing TV advertising contents and inserting interstitial advertisements on TV programs, which allow users to play the DIY advertisements on their own televisions at any time without going trough broadcasters.

Another object of the invention to provide an apparatus and method for producing TV advertising contents and inserting interstitial advertisements on TV programs, which can play the DIY advertisements by a sub-picture (e.g. a picture of bargain products) on the top of the main picture (e.g. TV programs) and can display captions on the main picture. For example, by showing captions such as "25% off today" to publicize the DIY advertising messages to the audiences who are watching TV.

The further object of the invention to provide an apparatus and method for producing TV advertising contents and inserting interstitial advertisements on TV programs, which allow ad-providers to leverage TV programs to attract audiences and audiences also can learn messages from ad-providers through the interstitial ads while watching TV.

The yet further object of the invention to provide an apparatus and method for producing TV advertising contents and inserting interstitial advertisements on TV programs, which can be used at places such as shop windows, restaurants, hotels, clubs, companies, hospitals, banks, schools, stations, and governments offices.

The else further object of the invention to provide an apparatus and method for producing TV advertising contents and inserting interstitial advertisements on TV programs, which can be applied to the TV ads on public transportation such as tour buses, Mass Transit Railway, and airplanes to transmit messages, to make product promotions or travel guides.

The apparatus and method for producing TV advertising contents and inserting interstitial advertisements on TV programs, which is realizable to the above-mentioned objects, comprising:

An Audio and Video Input Unit which is primarily used to convert analog AV (audio and video) signals to digital signals. For example, to use Composite Video Baseband Signals (CVBS) or Luminance (Y) and Chrominance (C) signals as video input signals, and to convert these analog AV signals into digital AV signals, such as digital Luminance signal and Chrominance component signals of blue and red (Y, Cb, Cr). The input signals are from TV set, TV tuner, or from the output terminals of the Video Tape Recorder/Player and the Digital Video Disk Recorder/Player.

A Video and Graphic Processing Unit which is functioning as video format conversion, image scaling, graphic processing, video and graphics overlay or blending, caption processing, video synchronizer, etc. The said Video and Graphics Processing Unit can be used to scale down the images of TV programs that are from the Video Input Unit and the video or graphics (pictures of ads) that are from the Data Storage Unit. The said Unit can be used to overlay two images by PIP method with one on top of another, 'or to scale down two of the images to be paralleled and put on top of a background graphic. It is available to use the On-screen Display function to add captions onto said composed pictures regardless the pictures were overlaid or mixed with images or graphics anyway.

An Audio and Video Output Unit which convert digital AV signals that are received from Video and Graphics Processing Unit to analog AV signals, and then send to the AV terminals of the television. For example, to convert the digital YCbCr signals into analog CVBS or Y, C signals.

An Audio and Video Compression/Decompression Unit, which utilize its compression function to compress the AV signals from the Audio and Video Input Unit. The compressed AV data will be written to the Data Storage Unit by the Write function of the Data Read/Write Control Unit. The AV data storage will take less memory after compressed. The AV data stored in the Data Storage Unit also can be decompressed by the AV Compression/Decompression Unit, being transferred to said Video and Graphics Processing Unit, and being output to the television via said Video and Graphics Processing Unit. In order to save material cost, it is possible not to include the AV Compression/Decompression Unit. However, the AV data stored in the Data Storage Unit has to be uncompressed raw data.

A Data Read/Write Control Unit which controls data reading and writing of the Data Storage Unit.

A Data Storage Unit which is the memory for storing ad contents. Users can store the AV signals captured by digital cameras or to download the data AV, graphics and texts stored in PC into this Unit. Also, the AV signals inputted by external devices can be stored in this Unit after compressed by the present invention.

A System Control Unit which controls the operation of the present invention. The system operation can be divided into three modes as follows:
1. AV Playback Mode: to use the present invention and television set to broadcast (insert) the recorded advertisements of AV, graphics, and texts.
2. AV Recording Mode: to use the present invention to record the desired AV ad contents.
3. System Setting Mode: to setup the desired contents, time, locations, and the picture and font sizes, etc. of the interstitial ad contents in advance.

A User Interface Unit which is a remote controller, a keyboard input device, or a handwriting input device. Users can start the present invention by the User Interface Unit, e.g. to input necessary graphics and texts of advertisements, and to control all functions of operation for the present invention.

### BRIEF DESCRIPTION OF THE DRAWINGS

The drawings disclose an illustrative embodiment of the present invention which serves to exemplify the various advantages and objects hereof, and are as follows:
Fig 1A is a major architecture diagram of an apparatus and method for producing TV advertisement contents and inserting interstitial advertisements on TV programs.
Fig 1b is a schematic diagram illustrating two images (one is the TV program, the other is the picture of advertisement) are placed in parallel and overlaid with graphic background.
Fig 2 is a schematic construction of a Video and Graphics Processing Unit illustrating of an apparatus and method for producing TV advertisement contents and inserting interstitial advertisements on TV programs.
Fig 3 is another architecture diagram of an apparatus and method for producing TV advertisement contents and inserting interstitial advertisements on TV programs.
Fig 4 is yet another schematic construction of an apparatus and method for producing TV advertisement contents and inserting interstitial advertisements on TV programs.
Fig 5 is a schematic construction of the present invention integral with the Digital Versatile Disc (DVD) Recorder.
Fig 6 is a schematic constructional embodiment of the present invention integral with a Digital Camera.
Fig 7 is a schematic constructional embodiment of the present invention integral with a Digital Television.

### DETAILED DESCRIPTION OF THE PREFERRED EMBODIMENT

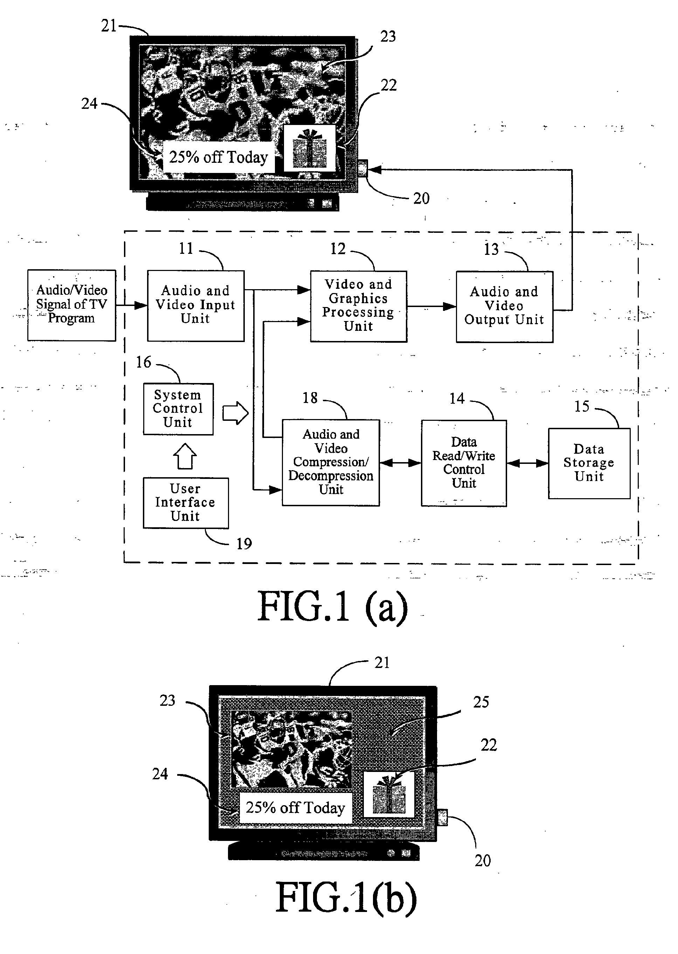

As shown in Fig. 1 through Fig. 7, the Apparatus for producing TV advertising contents and inserting interstitial advertisements on TV programs provided by this invention consists mainly of:

An Audio and Video Input Unit 11, consisting mainly of a Video Decoder 111 and an Audio Analog to Digital Converter (ADC) 112; the Video Decoder 111 converts the analog CVBS or YC signal into a digital signal, such as a YCbCr; the Audio Analog to Digital Converter (ADC) 112 converts the analog audio signal into a digital audio signal, such as a Pulse Code Modulation (PCM) signal;

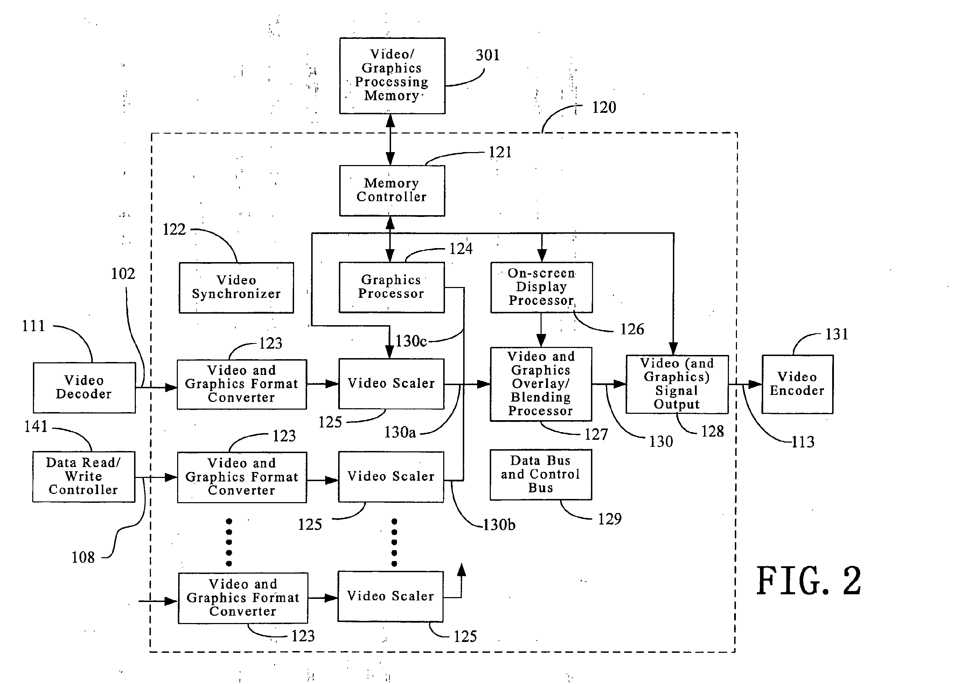

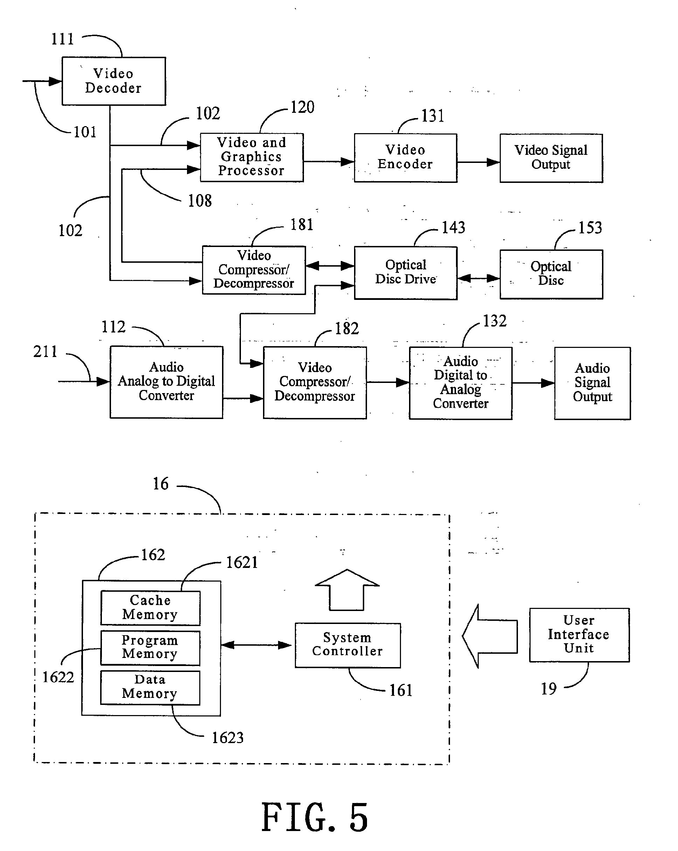

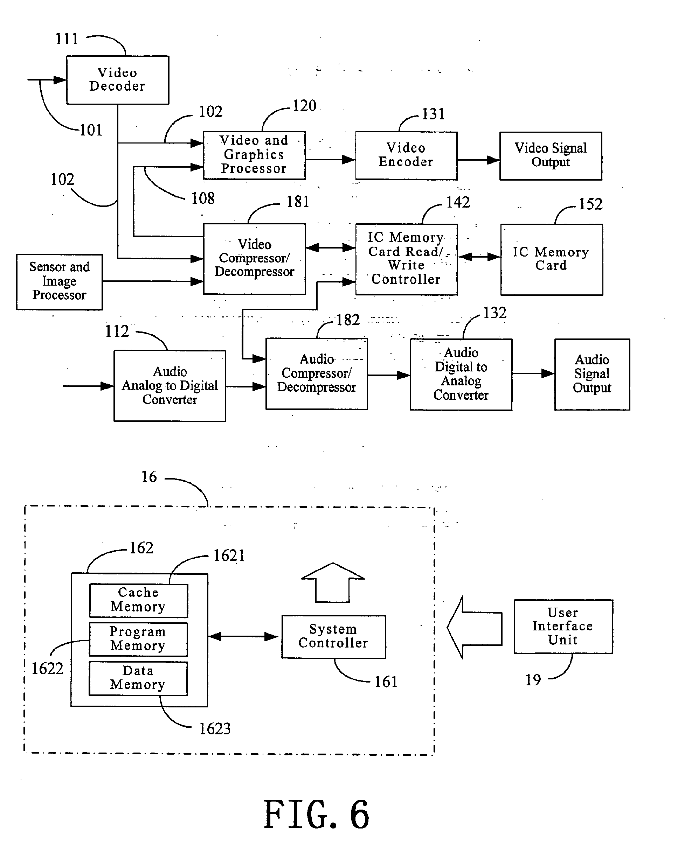

A Video and Graphics Processing Unit 12 which can be such a Video and Graphics Processor 120, e.g., as shown but not limited to Fig. 2, consisting mainly of:
A Memory Controller 121 and a Video/Graphics Processing Memory 301, whereas the Video/Graphics Processing Memory 301 is used for temporary storage of Data generated by the Video and Graphics Processing Unit 12 while processing video and graphics; the Memory Controller 121 is used for access timing and addressing control;
A Video Synchronizer 122, synchronizing the two images generated by the Video Decoder 111 of the Audio and Video Signal Input Unit 11 and the Data Storage Unit 15;
At least one or more Video and Graphics Format Converters 123, converting the basic colors of red, green and blue (R,G,B) signal formats into the format of YCbCr and converting the progressive scan format into the interlace scan format; the functions of such can be increased or decreased as actually required;
A Graphics Processor 124 which serves to generate graphics, such as drawing simple lines, squares and circles or more complicate graphics; the graphics can be of multi-layer structures, being on the same plain of the image or in the background or foreground for paralleling, overlaying or blending with the image;
At least one or more Video Scaler 125 which proportionally zooms in or out images; the functions of such can be increased or decreased as actually required;
An On-Screen Display Processor 126 which serves to display Texts on the TV Screen;
A Video and Graphics Overlay/Blending Processor 127 which overlays images, for instance, when overlaying a sub picture with its size zoomed in to 1/N (N>1) on top of the main picture (which is of the full size of 1); while blending images, such as setting the amplitude of the signal of a part of the advertisement image to M% of that of the original signal, as well as setting the TV program picture signal to its N% to make M% + N% = 100% and adds the two signals for blending;
A Video (and Graphics) Signal Output 128 which is the output interface for video (and graphics) signals to the Video Encoder 131 of the Audio and Video Output Unit 13, usually including a Data Buffer;
A Data Bus and Control Bus 129 which serves as an interface between the Video and Graphics Processing Unit 12 and the System Control Unit 16, communicating data and control commands between them;
An Audio and Video Output Unit 13, which consists of a Video Encoder 131 and an Audio Digital to Analog Converter (DAC) 132; the Video Encoder 131 serves mainly to convert digital video signals into analog signals, such as converting a YCbCr into an analog CVBS or YC signal; the Audio Digital to Analog Converter (DAC) 132 converts a digital audio signal into an analog signal, such as converting a PCM signal into an analog audio signal;
A Data Storage Unit 15, which can be a Data Storage Device 151, used mainly for storing audio/video and graphics/text data; such as IC Memory Card 152, Optical Disc 153 or Magnetic Disc; while' IC Memory Card 152 includes but not limited in any IC Memory Card made of non-volatile rewrite-able read/write IC Memory and Silicon Drives, such as SmartMedia Card, Compact Flash Card, Secure Digital Card, MultiMedia Card, Memory Stick Card, etc.; Optical Disc 153 includes Compact Disc (CD) and Digital Versatile Disc (DVD) and the like; Magnetic Disc includes hard disc and floppy disc and the like;
A Data Read/Write Control Unit 14, which can be a Data Read/Write Controller 141, controlling the address and time for reading and writing data, and packing and unpacking the data package format within the Data Storage Unit 15; if the Data Storage Unit 15 is an IC Memory Card 152 (as shown in Fig. 6), the Data Read/Write Control Unit 14 is then an IC Memory Card Read/Write Controller 142 (as shown in Fig. 6); there are many formats of current IC memory cards and if multiple formats of various IC Memory Cards are to be read/written, the Data Read/Write Control Unit 14 can make use of the Multi-Functional IC Memory Card Read/Write Controller 142; if Data Storage Unit 15 is an Optical Disc 153, the Data Read/Write Control Unit 14 is then an Optical Disc Drive 143 (shown in Fig. 5), such as Compact Disc ReWritable Drive (CD-RW Drive), Digital Versatile Disc Rewritable Drive (DVD-RW Drive), etc.; if the Data Storage Unit 15 is a Magnetic Disc, the Data Read/Write Control Unit 14 is then a Magnetic Disc Read/Write Controller, i.e. a Magnetic Disc Drive, such as a Hard Disc Dive;
An Audio and Video Compression/Decompression Unit 18, which consists mainly of a Video Compressor/Decompressor 181 and an Audio, Compressor/Decompressor 182; the Video Compressor/Decompressor 181 serves to compress or decompress Video Signals, either with JPEG (Joint Photographic Experts Group) compression or MPEG (Motion Picture Experts Group) compression or other methods; the Audio Compressor/Decompressor 182 serves to compress or decompress Audio Signals, either with Adaptive Pulse Code Modulation (ADPCM), MPEG or other methods;
A System Control Unit 16, mainly consisting of a System Controller 161 and various working memories 162, which include Cache Memory 1621, Program Memory 1622 and Data Memory 1623; the System Controller 161 is the controller for system functioning that controls the functioning of all the above-mentioned Units under various operation modes; the Memory 162 can consist of Static Random Access Memory (SRAM) and Flash Memory or of other Rewritable IC Memory with the same function or Mask ROM; the Cache Memory 1621 is the memory for registering the operational commands and operation data that are frequently used when the System Controller is activating 161; the Program Memory 1622 serves for storing software needed by the system; the Data Memory 1623 stores data needed by the system; Text/Font data needed by on-screen displays are also stored herein;
An User Interface Unit 19 which can be a remote controller, a keyboard, a handwriting input device, or other input devices; the User can instruct the System Control Unit 16 through this Unit; for instance, graphics needed to be drawn as backgrounds and texts to be edited as captions for advertisements can be done through handwriting input devices; or, the advertisement timing can be controlled by the remote controller.

In the following, we will show, with the storage of Audio/Video Data in IC Memory Cards as an example, how to prepare Audio/Video data for TV advertisements by taking advantage of this invention. The costs of currently available IC memory cards have been coming down and usually attached as free accessories of digital cameras. Digital cameras with the usual VGA format of 350,000 pixels (640 × 480) have become popular for considerable lower costs. Thus, it is easy to take picture shots with digital cameras and, if a digital camera provides a sound recording function, it can also have voices recorded. Furthermore, a popular 32MB (Mega-Byte) memory card can hold 34 pictures of VGA format (640× 480, RGB), i.e., (32MB× 8 bit/Byte) /(640× 480× 8 bit× 3) ≈ 34 pictures; or, it can take motion pictures compressed with Motion JPEG (320× 240, YCbCr Format, compressed in 10 folds) for about 92 seconds, i.e., (32MB× 8bit/Byte) / (320× 240 × 8× 1.5M-bit/frame× 0.1× 30 frame/sec) ≈ 92 sec; or, it can take motion pictures compressed with MPEG-1 for about 256 seconds (the compressed video data volume is supposed to be 1 M-bit/sec), i.e., (32MB× 8 bit/Byte) / (1M-bit/sec) ≈ 256sec. This is big enough a capacity for normal advertising and propagation. For longer advertising contents, IC Memory Cards, CD-ROMs or Magnetic Discs with higher capacities can be used.

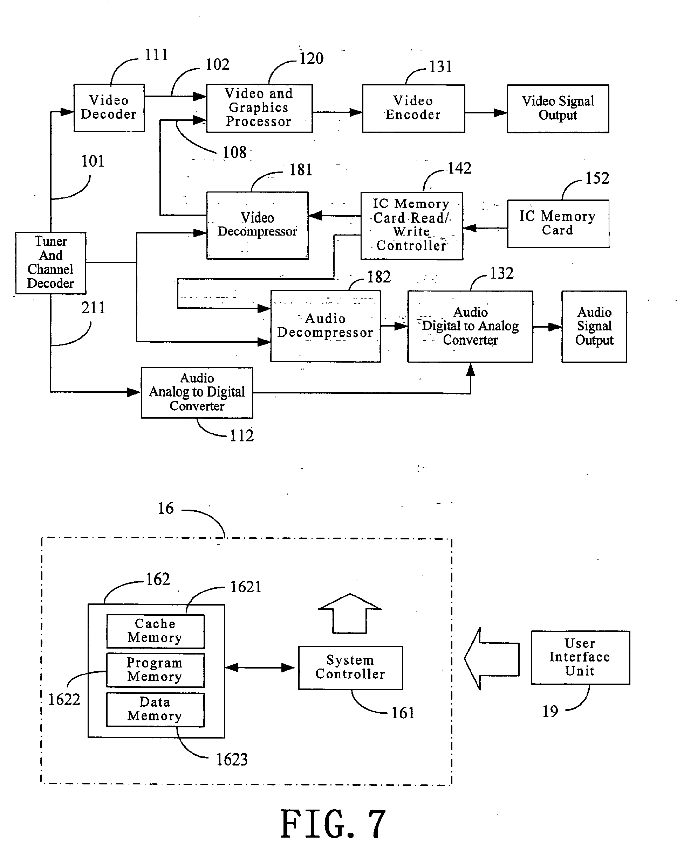

For the Data Storage Unit of the invention, an IC Memory Card 152 (shown in Fig. 6 and Fig. 7) can be used as the Audio/Video and Text/Graphics Storage Device. The content of the IC Memory Card 152 can be taken by a usual digital camera or, by making use of the Audio and Video Signal Input Unit 11 of the invention, send the signals to be compressed to the Audio and Video Signal Compression/Decompression Unit 18 and then write the audio/video data into IC Memory Card 152 for storage through the IC Memory Card Read/Write Controller 142. Thus, anyone can make use of a currently available environment to produce low-cost audio/video data needed for TV advertisements; whereas, the data of audio/video and texts/graphics can be stored in bitmap or in common JPEG picture formats, etc.

The audio/video signals taken by digital cameras or camcorders can also be pre-stored in a computer and then treated by a Audio/Video Software Editor at the computer to be downloaded to an IC Memory Card 152, an Optical Disc 153 or a Magnetic Disc of the Data Storage Unit 15 for playback.

There are three operation modes of the invention:
(1) Playback Mode: Using the invention and a TV Set to playback (insert) the recorded audio/video and text/graphics of advertisements; users can control the size, position, etc. of the inserted advertisement on real time basis under this operation mode;
(2) Recording Mode: Using the invention to record the wanted audio/video contents for advertising;
(3) System Setting Mode: Enabling preset of the wanted audio/video contents for advertising, picture size, position and the manner of its change, time setting for start/end, and number of repetitions of the insertion; the user can make graphics and edit texts for advertising under this operation mode, too.

The following explicates the three Modes of Playback, Recording and System Setting.

### (1) Playback Mode

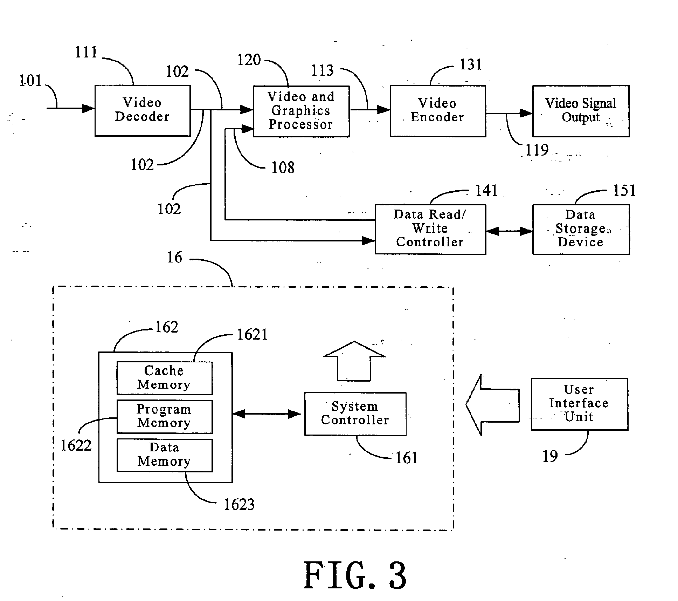

Please refer to Fig. 3, which is an implemented example of an economical configuration. It consists of the Video Decoder 111, the Video and Graphics Processor 120, the Video Encoder 131, the Data Read/Write Controller 141, the Data Storage Device 151, the System Controller 161 of the System Control Unit 16, Memories such as Cache Memory 1621, Program Memory 1622 and Data Memory 1623, as well as the User Interface 19; in this example, the data of advertisements to be stored in the Data Storage Device 151 are uncompressed video signals, such as digital RGB or digital YCbCr pixel data; through the User Interface 19, the user can drive the System Controller 161 of System Control Unit 16 and control the Data Read/Write Controller 141 to read the stored video data from the Data Storage Device 151, which is YCbCr or RGB digital signal 108, and then send the Signal 108 to the Video and Graphics Processor 120, which can receive Digital Video Signal 102 coming from the Video Decoder 111 at the same time and through which the Video Signal 102 and 108 are overlaid or blended and the overlaid or blended Signal 113 is sent into the Video Encoder 131 of the Audio/Video Signal Output Unit 13, converting it into the Analog Signal 119 and outputting the Analog Signal 119 to the TV Set 21 for playback. The playback of the picture can be in the manners as shown in Fig. 1 (a) and (b), either blending the pictures from the Data Storage Device 151 and the TV program or overlaying Sub Picture 22 and Main Picture 23 for Playback, while the On-Screen-Display (Caption) 24 can be added through the User Interface Unit 19. Furthermore, as shown in Fig. 1 (b), all of the Sub Picture 22, the Main Picture 23 and the On-Screen-Display 24 can be paralleled on screen with the background of the Graphics 25, which can be made under System Setting Mode by the user as required by him.

Please refer to Fig. 2. Since the Video and Graphics Processor 120 in this example is treated in the Interlaced Scan YCbCr Signal Format, therefore, if the Signal 108 received by the Video and Graphics Processor 120 from the Data Read/Write Controller 141 should be in the RGB Signal Format, the Signal would be converted into Interlaced Scan YCbCr Signal by the Video and Graphics Processor 120 through the built in Video and Graphics Format Converter 123.

The Video and Graphics Processor 120 receives YCbCr Signal 102 from the Video Decoder 111 and YCbCr (or RGB) Signal 108 from the Data Read/Write Controller 141 concurrently, then the Video and Graphics Processor 120 converts either one of the signals from the Video Decoder 111 or the Data Read/Write Controller 141; for instance, the video signal of the Data Read/Write Controller 141 being converted by the Video and Graphics Format Converter 123 as the Sub Picture and scaled by the Video Scaler 125 into the Sub-Picture Signal 130b of 1/2, 1/4 or 1/N of its original size, which can be sent together with the Main Picture Video Signal 130a (which can go untreated directly through Video Format Converter 123 and Video Scaler 125) from the Video Decoder 111 and the Graphic Signals 130c generated from the Graphics Processor 124; these Signals 130a, 130b and 130c will be sent into the Video and Graphics Overlay/Blending Processor 127, through which the overlay or blending is effected, on top of such a signal text can be added by the On-Screen Display Processor 126 and thus generate the Composite Signal 130 of the TV program and the Contents of Advertising. The Composite Signal 130 is then treated by the Video (and Graphics) Signal Output 128 to become the Signal 113 to be Input into the Video Encoder 131, as shown in Fig. 2.

Please refer to Fig. 3 as well as Fig. 1 (a) and (b). The signal of the Main Picture 23 can be the Video Signal 101 coming from the TV Program, while the Sub Picture 22 the picture stored in the Data Storage Device 151, which is made by the user. The Sub Picture 22 and the Main Picture 23 are interchangeable, with the timing of the Interchange controlled by the System Controller 161 as predetermined or random. The System Controller 161 can also change the position of the Sub Picture 22, such as to be on the upper right corner or the lower left. The Sub Picture 22 can be displayed in various manners, such as fan in, fan out and semi-transparent blending.

Please refer to Fig. 3. The Video Encoder 131 has a built in Video Digital to Analog Converter, which enables it to convert the Digital YCbCr Signal 113 into a CVBS Analog Signal or a S-Video YC Signal 119, which is then sent to the Video Input Port 20 of the TV Set (shown in Fig. 1 (a)) for Playback on the TV Set 21. The System Controller 161 in the System Control Unit 16 controls mainly the treatment of audio/video and text/graphics signals in all Units. Under Playback Mode, the user can insert or interrupt and change the size, position, displaying or hiding the text of the advertisements or interchange the Sub- and Main Picture through the User Interface Unit 19, as shown in Fig. 1 (a) and (b).

### (2) Recording Mode

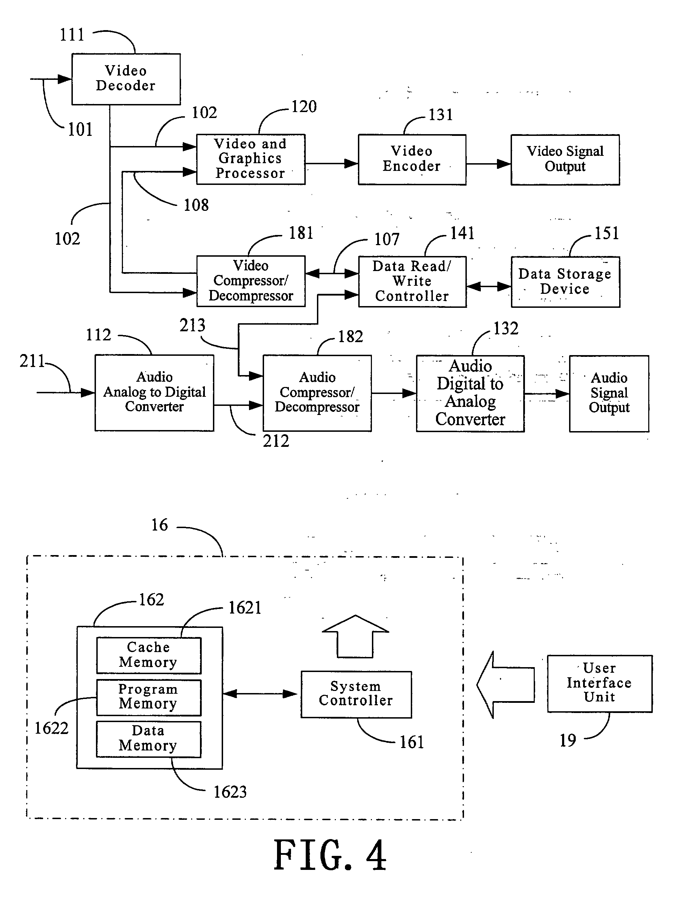

Fig. 4 shows a fully implemented example of the invention. It shows an addition of a Video Compressor/Decompressor 181 and an Audio Compressor/Decompressor of the Audio and Video Compression Unit 18 to what was shown on Fig. 3, in order to compress Audio/Video Data for saving memory space needed to record Audio/Video in the Data Storage Device 151. In this configuration, the Analog Video Signal 101 and the Audio Signal 211 can be compressed and stored in the Data Storage Device 151.

The Analog Video Signal 101 and the Analog Audio Signal 211 can be signals of the TV program from TV Tuner or signals received from other Audio/Video playback equipments, such as Video Tape Recorder/Player, DVD Recorder/Player, etc. The Video Decoder 111 and Audio Analog to Digital Converter 112 converts the Analog Video Signal 101 and Analog Audio Signal 211 separately into the Digital Video Signal 102 and the Digital Audio Signal 212. The Digital Video Signal 102 and the Digital Audio Signal 212 are compressed separately through the Video Compressor 181 and Audio Compressor 182. The compressed Video Signal 107 and Audio Signal 213 can be controlled by the Data Read/Write Controller 141 to be stored in the Data Storage Device 151 at a defined address and in a defined format. The Compression/Decompression can be of JPEG, MPEG or other methods. The Audio Compression/Decompression can be of ADPCM, MPEG or other methods. If the capacity of the Data Storage Device 151 big enough, the Digital Video Signal 102 and the Audio Signal 212 can be directly stored into the Data Storage Device 151 by the Data Read/Write Controller 141, without going through the Video Compressor 181 and Audio Compressor 182. When Playback, the compressed Video Signal 107 and Audio Signal 213 are decompressed through the Video Compressor 181 and Audio Compressor 182 in the reverse direction. The rest of the Playback is the same as described in Item (1) "Playback Mode" and is not to be repeated herein.

Please refer to the example of the economical configuration in Fig. 3 again. The Digital Video Signal 102 (uncompressed) can be stored into the Data Storage Device 151 through the Data Read/Write Controller 141 and, therefore, it can also be recorded in the device.

### (3) System Setting Mode

Please refer to Fig. 3 and Fig. 4. Under System Setting Mode, the user can take advantages of the facilities of the User Interface 19, such as a keyboard, to input and edit the Contents of Text/Graphics stored in the Data Memory 1623 and to program the Operational Instructions stored in the Program Memory 1622, or to display a Menu of the Contents of Text/Graphics and Operational Instructions on the screen for selection with up, down, left and right keys. The User Interface 19 can also be a Handwriting Input Device, which allows the input of Instructions and Contents of Text/Graphics by hand. Thus, the jobs can be done under the System Setting Mode are as follows:
1. Make use of the User Interface 19, as depicted in Fig.3 and Fig. 4, and the Graphics Processor 124 built in the Video and Graphics Processor 120, as depicted in Fig. 2, to draw graphs, such Graph 25 as shown in Fig. 1 (b), and to store it into the Data Memory 1623 or Data Storage Device 151, as depicted in Fig.3 and Fig. 4.
2. Make use of the Fonts stored in the Data Memory 1623 to edit advertising Text needed for On-Screen Display and store these Data back into the Data Memory 1623 or into the Data Storage Device 151.
3. Preset the Start/End Time of Insertion and the number of repetition of the insertion.
4. Preset the source, size, position, display manners and timing of the Sub-Picture for Insertion.
5. Pre-select the Contents of texts/graphics and preset the source, size, position, display timing and manners for Insertion, such as flashing or scrolling.
6. Download and update System Instructions stored in Program Memory 1622 and Data stored in Data Memory.

Please refer at the same time to Fig. 2, Fig. 3 and Fig. 4 for both Hardware Units and Software Programs of the invention mentioned above. All of them are to be realized with existing technology and thus does not need to detail the principles of their functioning.

Please refer to Fig. 1 (a). Owing to the advancement of IC design and of its manufacture technology, all of the Audio/Video Input Unit 11, Audio/Video Processing Unit 12, Audio/Video Output Unit 13, Audio/Video Compression/Decompression Unit 18, Data Read/Write Control Unit 14 and the System Control Unit 16 of the invention can be made in accordance with IC Technology (e.g., one or two ICs) with economical efficiency and in practical scale. Thus, the costs of the invention can be low and the price acceptable for requirements of the general public.

The invention can be a stand-alone unit and/or integrated into other devices. All of the Functional Units of the invention shown in Fig. 1 (a) can be implemented in a different combination as exemplarily given in this text with the functions of other devices, such as Digital TV Sets, Digital Set-Top Boxes, Digital Cameras or DVD Recorders/Players, to become their added function, achieving an optimal economical efficiency. Fig. 5 shows the example of a framework of the invention integrated with a DVD Recorder. Except for the Functional Box of the Video and Graphics Processor 120; the remaining functions are all currently available ones of a common DVD Recorder. For this reason, the invention combined with a DVD Recorder can meet the purpose of recording and insertion of TV Advertisements at very low costs. And, Fig. 6 shows the example of a framework of the invention integrated with a Digital Camera. Except for the Functional Box of the Video Decoder 111 and the Video and Graphics Processor 120 (as well as the System Controller and the User Interface, requiring more complexity in their functionalities), all of the remaining functions are currently available ones. And, Fig. 7 shows the example of a framework of the invention integrated with a Digital TV Set. The Functional Framework of the Hardware shown in Fig. 7 is similar to that of a common Digital TV Set, which functions with PIP. The Video Decoder 111 and the Audio Analog to Digital Converter 112 in Fig. 7 is designed for decoding analog signals of existing NTSC or PAL TV programs, the so-called Legacy Signal in Digital TV Sets. Hence, the Digital TV Set makers need only to add on the Software Driver under the Playback Mode and System Setting Mode of this invention to achieve the function of adding advertising texts and graphs, as well as, to substitute an IC Memory Card of storing Digital Audio/Video Data for the IC Memory Card of Billing Administration. And so the Digital TV Set makers can provide customers the feature of inserting advertisements and messages with only a little extra material cost than a common Digital TV set. Having all the above mentioned, it is easy to see that if a device, consisting of all or part of the Functional Units of the invention, treats and stores Audio/Video in a similar or in the same way of the invention and if it can -be used for inserting interstitial advertisement and messages, it falls then into the scope of the claims of the patent prosecution and shall be protected as such.

The Apparatus and Methods for Producing TV Advertising Contents and Inserting Interstitial Advertisements on TV Programs provided by the invention has the following advantages in comparison to the ordinary skill of the art:
1. The invention makes use of IC Memory Cards or Optical Discs or Magnetic Discs as Data Storage Components for Audio/Video and Text/Graphics (i.e., the contents of the advertisements), enabling the utilization of pictures and sound taken by common digital cameras and stored in such Data Storage Devices, enabling the downloading Audio/Video and texts/graphics signals and data stored in computers to such Data Storage Devices, enabling the compression of input Audio/Video signals for storing in such Data Storage Devices and enabling retreat of the pictures from such Data Storage Devices for overlay or blending with TV programs and adding texts to achieve the purpose of advertising.
2. The invention is applicable to specifically regional advertisement and messaging of private and personal applications.
3. The user can prepare contents of TV advertisement easily.
4. The user can update contents of TV advertisement easily and at any time.
5. The invention makes use of TV programs to attract audience for playback of the prepared advertisements to achieve the purpose of advertising messages.
6. The use of the invention allows insertion of TV advertisement without interrupting TV programs.
7. The use of the invention is not limited by the advertising time setting of TV broadcasting and the user can insert advertisement at anytime as he wishes on his own.
8. The use of the invention allows insertion of advertisement without involving TV broadcasting and thus avoids payment to broadcasters.
9. The invention is of low costs and preparation of advertisement on one's own is as well of low costs.

Many changes and modifications in the above-described embodiment of the invention can, of course, be carried out without departing from the scope thereof. Accordingly, the invention is disclosed to promote the progress in science and the useful arts, and intends to be limited only by the scope of the appended claims.

## Claims

1. A method for producing TV advertising contents and inserting interstitial advertisements on TV programs comprising the steps of:
storing data into a Data Storage Unit, wherein the data includes audio, video, graphics, and texts that are captured and processed by using digital cameras, digital camcorders, the appartus of this invention, computers, or other audio/video facilities;
readout the stored audio/video and graphics/texts data from the Data Storage Unit;
blending or overlaying the data by the Video and Graphics Processing Unit to incorporate into the TV program that are transmitted from the Audio and Video Input Unit for broadcasting, wherein the means of incorporation include to broadcast with blended pictures of the Data Storage Unit and the TV program, and to broadcast with Picture-in-Picture (PIP) overlay; and
inserting on-screen-displays onto the TV program.

2. An apparatus for producing TV advertising contents and inserting interstitial advertisements on TV programs, comprising:
An Audio and Video Input Unit which can convert the received analog signals of audio and video into digital signals;
A Video and Graphics Processing Unit which can create graphics, carry out picture blend or overlay to incorporate into the TV program that is transmitted from the Audio and Video Input Unit, and inserting on-screen-displays on TV programs;
An Audio and Video Output Unit which is primarily performed to convert digital audio and video signals into analog signals;
A Data Storage Unit which is primarily used to store the data of audio, video, graphics, and texts;
A Data Read/Write Control Unit which controls the address and time for reading and writing data, and defines the data package format within the Data Storage Unit;
An Audio and Video Compression/Decompression Unit which is performed to compress or decompress audio and video signals;
A System Control Unit which can control the functioning of all the above-mentioned Units under the operation modes of Playback Mode, Recording Mode, and System Setting Mode;
An User Interface Unit by which users are allowed to instruct the System Control Unit;
Operators can pre-store data in the Data Storage Unit, such as the data of audio and video - captured by digital cameras or digital camcorders, or the data of audio/video and graphics/texts produced by computers; or to use common AV equipments to deliver the analog audio and video signals to the Audio and Video Signal Input Unit of this invention to be converted into digital signals, transferring to the Audio and Video Signal Compression/Decompression Unit for compressing, and through the Data Read/Write Control Unit to be written and stored in the Data Storage Unit; In the playback process, the Audio/Video data stored in the Data Storage Unit can be readout by the Data Read/Write Control Unit, decompressed through the Audio and Video Compression/Decompression Unit into signals, and be transferred to the Video and Graphics Processing Unit; meanwhile, the Video and Graphics Processing Unit receives audio/video signals of TV programs provided from the Audio and Video Signal Input Unit; these two types of signals (data) then will be blended or overlaid under the processing of the Video and Graphics Processing Unit, and further be converted into analog signals by the Audio and Video Output Unit for playback on the TV screen.

3. An apparatus for producing TV advertising contents and inserting interstitial advertisements on TV programs, comprising:
An Audio and Video Input Unit which can convert the received analog signals of audio and video into digital signals;
A Video and Graphics Processing Unit which can create graphics, carry out picture blend or overlay to incorporate into the TV program that is transmitted from the Audio and Video Input Unit, and inserting on-screen-displays on TV programs;
An Audio and Video Output Unit which is primarily performed to convert digital audio and video signals into analog signals;
A Data Storage Unit which is primarily used to store the data of audio, video, graphics, and texts;
A Data Read/Write Control Unit which controls the address and time for reading and writing data, and defines the data package format within the Data Storage Unit;
A System Control Unit which can control the functioning of all the above-mentioned Units under the operation modes of Audio/Video Playback Mode, Audio/Video Recording Mode, and System Setting Mode;
An User Interface Unit by which users are allowed to instruct the System Control Unit;
Operators can pre-store data in the Data Storage Unit, such as the data of audio and video captured by digital cameras or digital camcorders, or the data of audio/video and graphics/texts produced by computers; or to use common AV equipment to transfer the analog audio and video signals to the Audio and Video Signal Input Unit to be converted into digital signals, and through the Data Read/Write Control Unit to be written in the Data Storage Unit for storing; In the playback process, the audio/video data stored in the Data Storage Unit can -be readout by the Data Read/Write Control Unit, and be transferred to the Video and Graphics Processing Unit; meanwhile, the Video and Graphics Processing Unit receives Audio/Video signals of TV programs provided from the Audio and Video Signal Input Unit; these two types of signals (data) then will be blended or overlaid under the processing of the Video and Graphics Processing Unit, and further be converted into analog signals by the Audio and Video Output Unit for playback on the TV screen.

4. An apparatus for producing TV advertising contents and inserting interstitial advertisements on TV programs according to claim 2 or 3, wherein the Audio and Video Input Unit includes a Video Decoder that can be used to convert the analog video signals into digital video signals, and an Audio Analog to Digital Converter that can be used to convert analog audio signals into digital audio signals.

5. An apparatus for producing TV advertising contents and inserting interstitial advertisements on TV programs according to claim 2 or 3, wherein the Video and Graphics Processing Unit can be a Video and Graphics Processor wherein mainly comprising:
A Memory Controller and a Video/Graphics Processing Memory, whereas the Video/Graphics Processing Memory is used for temporary storage of Data generated by the Video and Graphics Processing Unit while processing Video and Graphics; the Memory Controller is used to control data access time and address;
A Video Synchronizer which synchronizes the two (or more than two) images generated by the Video Signal Input Unit and the Data Storage Unit;
At least one or more Video and Graphics Format Converters which carries out the conversion of signal formats of video and graphics, and converts the progressive scan format into the interlace scan format; the functions of such can be increased or decreased as actually required;
A Graphics Processor which serves to generate graphics that can be of multi-layer structures, for example, the graphics can be on the same plain with images, or in the background or foreground for paralleling, overlaying or blending with images;
At least one or more Video Scaler which proportionally zooms in or out images;
An On-screen Display Processor which serves to display captions on the TV screen;
A Video and Graphics Overlay/Blending Processor which overlays or blends images;
A Video and Graphics Signal Output which is the output interface for video and graphics signals to the Video Encoder of Video Output Unit; and
A Data Bus and a Control Bus which serve as the interface between the Videoe and Graphics Processing Unit and the System Control Unit for transferring data and control commands between them.

6. An apparatus for producing TV advertising contents and inserting interstitial advertisements on TV programs according to claim 2 or 3, wherein the Audio and Video Output Unit consists of a Video Encoder and an Audio Digital to Analog Converter; the Video Encoder primarily serves to convert digital video signals into analog signals; and the Audio Digital to Analog Converter converts digital audio signals into analog signals.

7. An apparatus for producing TV advertising contents and inserting interstitial advertisements on TV programs according to claim 2 and 3, wherein the Data Read/Write Control Unit can be a Data Read/Write Controller, which can be an IC Memory Card Read/Write Controller, Optical Disc Drive, or a Magnetic Disc Drive.

8. An apparatus for producing TV advertising contents and inserting interstitial advertisements on TV programs according to claim 2 or 3, wherein the Data Storage Unit can be a data storage component of an IC Memory Card, an Optical Disc, or a Magnetic Disk.

9. An apparatus for producing TV advertising contents and inserting interstitial advertisements on TV programs according to claim 2 or 3, wherein the Audio and Video Compression/Decompression Unit mainly includes a Video Compressor/Decompressor and an Audio Compressor/Decompressor; the Video Compressor/Decompressor 181 serves to compress or decompress video signals; and the Audio Compressor/Decompressor 182 serves to compress or decompress audio signals.

10. An apparatus for producing TV advertising contents and inserting interstitial advertisements on TV programs according to claim 2 or 3, wherein the System Control Unit mainly includes a System Controller and various memories; the System Controller is a controller for System Functions; and the Memory includes Cache Memory, Program Memory, and Data Memory, wherein the Cache Memory is the memory for registering the operational commands and operation data that are frequently used when the System Controller is activating; the Program Memory serves for storing the system operation program and application programs needed by this apparatus; and the Data Memory stores the data needed by this apparatus, and the text/graphic Data of the advertisement contents can be stored herein as well.

11. An apparatus for producing TV advertising contents and inserting interstitial advertisements on TV programs according to claim 2 or 3, wherein the User Interface Unit can be a remote control, a keyboard, a handwriting input device, or other input devices, which allows users to instruct the System Control Unit through this User Interface Unit; for instance, to edit captions and draw graphs of ad contents; to control the timing of playback and the location on TV screen; to display/undisplay the on-screen-displays; and to instrut the system functions.

12. An apparatus for producing TV advertising contents and inserting interstitial advertisements on TV programs according to claim 2 or 3 in which divided into Playback Mode, Recording Mode, and System Setting Mode, wherein the Playback Mode is to use the apparatus of this invention and a TV set to playback (insert) the recorded advertisements of audio/video and graphics/texts; the Recording Mode is to use the apparatus of this invention to produce the desired audio/video contents for advertising and record the contents in the Data Storage Unit; the System Setting Mode allows users to edit captions and draw graphs, and to preset the advertisement contents of audio/video and graphics/texts for inserting, picture size and location, time of start and ending, and the number of repetitions, etc.
